# EUROPEAN PATENT APPLICATION

(11) **EP 4 391 213 A1**
(43) Date of publication of application: **26.06.2024**
(21) Application number: 23788621.3
(22) Date of filing: 13.04.2023
(51) Int. Cl.: H01M 50/595, H01M 50/586, H01M 10/42, H01M 10/52, H01M 50/531, H01M 10/058, C09J 7/22, C09J 7/29

(54) **ELECTRODE ASSEMBLY INCLUDING ELECTRODE TAPE HAVING MOISTURE ABSORBENT LAYER, AND SECONDARY BATTERY COMPRISING SAME**

(30) Priority: 13.04.2022 KR 20220045598
(71) Applicant: LG Energy Solution, Ltd., Seoul 07335 (KR)
(72) Inventor: JEONG, Ansoo, Daejeon 34122 (KR); SON, Byungdae, Daejeon 34122 (KR)
(74) Representative: Goddar, Heinz J.
(86) International application number: PCT/KR2023/005022
(87) International publication number: WO 2023/200272

(57) **Abstract**

The present specification relates to an electrode assembly including a tape for an electrode including a moisture adsorption layer, and a secondary battery including the same.

## Description

### [Technical Field]

This application claims priority to and the benefit of Korean Patent Application No. 10-2022-0045598 filed in the Korean Intellectual Property Office on April 13, 2022, the entire contents of which are incorporated herein by reference.

The present invention relates to an electrode assembly including a tape for an electrode including a moisture adsorption layer, and a secondary battery including the same.

### [Background Art]

In recent years, as there has been increasing demand for portable electronic products such as laptop computers, video cameras, and mobile phones and the development of electric vehicles, batteries for energy storage, robots, and satellites has begun in earnest, a lot of research has been conducted on secondary batteries that are used as drive power sources for these products.

Examples of such secondary batteries include nickelcadmium batteries, nickel-metal hydride batteries, nickel-zinc batteries, and lithium secondary batteries. Among such various secondary batteries, lithium secondary batteries are widely used in the field of advanced electronic devices because they are freely chargeable/dischargeable due to almost no memory effect compared with nickel-based secondary batteries, have a very low self-discharge rate, a high operating voltage and a high energy density per unit weight.

In general, a lithium secondary battery is constituted by stacking or winding an electrode assembly composed of a positive electrode, a negative electrode, and a separator interposed between the positive electrode and the negative electrode, embedding the stacked or wound electrode assembly in a metal can or a laminate sheet case, and injecting or impregnating an electrolyte solution thereinto.

An electrode assembly having a positive electrode/separator/negative electrode structure constituting the secondary battery is largely divided into a jelly-roll type (wound type) electrode assembly and a stack type (stacked type) electrode assembly according to its structure. The jelly-roll type electrode assembly has a structure in which a separator is interposed between long sheet-like positive and negative electrodes coated with an active material, which is then wound, and a stack type electrode assembly has a structure in which a plurality of positive and negative electrodes with a predetermined size are sequentially stacked with a separator interposed therebetween. Among them, the jelly-roll type electrode assembly has advantages in that it is easy to manufacture and has a high energy density per weight.

However, the secondary battery has problems such as gas generation or deterioration in high-temperature storage performance or cycle performance when moisture is present inside the cell or near the electrode, and also has problems in that deformation easily occurs in the core part to cause damage to the separator, resulting in a short.

In order to overcome the problems, there is a need for research on a secondary battery capable of preventing deformation of the core part while more effectively removing moisture inside the cell and moisture near the electrode.

### [Detailed Description of the Invention]

### [Technical Problem]

The present specification provides an electrode assembly including a tape for an electrode including a moisture adsorption layer for adsorbing moisture in a battery, and a secondary battery including the same.

### [Technical Solution]

An exemplary embodiment of the present invention provides an electrode assembly including an electrode laminate including a positive electrode, a negative electrode, and a separator provided between the positive electrode and the negative electrode, wherein the positive electrode includes a positive electrode coated portion provided with a positive electrode active material layer and a positive electrode uncoated portion not coated with the positive electrode active material, wherein the negative electrode includes a negative electrode coated portion provided with a negative electrode active material layer and a negative electrode uncoated portion not coated with the negative electrode active material layer, wherein the electrode assembly includes a tape for an electrode for wrapping around at least one end portion, in a long side direction, of the positive electrode, wherein the tape for an electrode includes an adhesive layer, and a moisture adsorption layer provided on one surface of the adhesive layer to adsorb moisture, wherein one surface of the adhesive layer located in a direction in which the moisture adsorption layer is provided includes a first concave-convex surface for increasing adhesion, and wherein a surface of the moisture adsorption layer includes a second concave-convex surface for increasing a surface area.

Another exemplary embodiment of the present invention provides a secondary battery including the electrode assembly.

### [Advantageous Effects]

The electrode assembly according to an exemplary embodiment of the present invention is characterized by including a tape for an electrode for wrapping around at least one end portion, in the long side direction, of the positive electrode. Specifically, the tape for an electrode includes a moisture adsorption layer for adsorbing moisture, so it can effectively remove moisture inside the battery, remove moisture near the electrode from an electrode taping process, and minimize the effect of moisture on high-nickel-based batteries that are vulnerable to moisture. When moisture of the electrode is removed as described above, the generation of HF can be minimized to prevent gas generation, preventing an overvoltage and improving high temperature storage performance and cycle performance.

In particular, the tape for an electrode is provided in the form of wrapping around at least one end portion, in the long side direction, of the positive electrode, thereby removing moisture in the battery and effectively preventing damage to the separator due to burrs occurring when the core of the electrode assembly is deformed, and preventing curling of the positive electrode uncoated portion.

In addition, the tape for an electrode provided in the form of wrapping around at least one end portion, in the long side direction, of the positive electrode includes a concave-convex surface on one surface of the adhesive layer, which can increase the adhesion to the moisture adsorption layer or a polymer resin layer, thereby minimizing delamination of the moisture adsorption layer, removing moisture more stably, and effectively preventing damage to the separator due to burrs.

### [Brief Description of Drawings]

FIGS. 1 to 4 are cross-sectional views of a tape for an electrode included in an electrode assembly according to an exemplary embodiment of the present invention, respectively.
FIG. 5 is a plan view of a positive electrode included in the electrode assembly according to an exemplary embodiment of the present invention.
FIGS. 6 and 7 are cross-sectional views of the positive electrode included in the electrode assembly according to an exemplary embodiment of the present invention.

### <Explanation of Reference Numerals and Symbols>

- 10:: adhesive layer
- 11:: first concave-convex surface
- 20:: moisture adsorption layer
- 21:: second concave-convex surface
- 30:: polymer resin layer
- 100:: positive electrode
- 100a:: positive electrode uncoated portion
- 100b:: positive electrode coated portion
- 101:: positive electrode tab
- 300:: tape for an electrode
- 400:: end portion of positive electrode

### [Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

Throughout the present specification, when a member is referred to as being positioned in parallel with another member, this may include a case where the member is positioned parallel to another member, but does not specify an angle between the member and another member.

In the present specification, when a portion is referred to as being connected to another portion, this includes not only a case where they are directly connected, but also a case where they are indirectly connected with another element interposed therebetween.

Hereinafter, preferred exemplary embodiments of the present invention will be described in detail with reference to the accompanying drawings. However, it should be understood that the embodiments of the present invention may be modified in various forms and the scope of the present invention is not limited to the embodiments described below. In the detailed description of the operating principle for the preferred exemplary embodiment of the present invention, when it is determined that a detailed description of related known functions or configurations may unnecessarily obscure the subject matter of the invention, the detailed description will be omitted. In addition, the same reference numerals are used for parts having similar functions and operations throughout the drawings.

When describing the present invention, detailed descriptions of related known technologies that may unnecessarily obscure the gist of the present invention will be omitted.

An exemplary embodiment of the present invention provides an electrode assembly including an electrode laminate including a positive electrode, a negative electrode, and a separator provided between the positive electrode and the negative electrode, wherein the positive electrode includes a positive electrode coated portion provided with a positive electrode active material layer and a positive electrode uncoated portion not coated with the positive electrode active material, wherein the negative electrode includes a negative electrode coated portion provided with a negative electrode active material layer and a negative electrode uncoated portion not coated with the negative electrode active material layer, wherein the electrode assembly includes a tape for an electrode for wrapping around at least one end portion, in a long side direction, of the positive electrode, wherein the tape for an electrode includes an adhesive layer, and a moisture adsorption layer provided on one surface of the adhesive layer to adsorb moisture, wherein one surface of the adhesive layer located in a direction in which the moisture adsorption layer is provided includes a first concave-convex surface for increasing adhesion, and wherein a surface of the moisture adsorption layer includes a second concave-convex surface for increasing a surface area.

In general, moisture management is becoming a major quality control item in a secondary battery, and in fact, moisture causes a side reaction inside the battery, which has a critical impact on the performance and safety of the battery. If moisture is present inside the battery or near the electrode, there are problems such as gas generation or deterioration in high-temperature storage performance or cycle performance, and problems in that deformation easily occurs in the core part to cause damage to the separator, resulting in a short.

However, due to various factors in processes such as material storage, dry room, and battery fabrication, a trace amount of moisture is inevitably contained in the secondary battery, and even if management measures such as moisture measurement are performed, it is difficult to remove the already introduced moisture again, resulting in a deterioration in the overall performance of the secondary battery.

In the present invention, a moisture adsorption layer is introduced into the tape for an electrode, which is used for an electrode that is a direct part taking part in a battery reaction, and is provided to wrap around an end portion of the electrode, thereby removing moisture in the battery to minimize a side reaction in the battery and to prevent deformation of the core part, damage to the separator, and curling of the positive electrode uncoated portion, resulting in an improvement in battery performance. The electrode assembly according to an exemplary embodiment of the present invention may include a tape for an electrode for wrapping around at least one end portion, in a long side direction, of the positive electrode.

In an exemplary embodiment of the present invention, the tape for an electrode includes an adhesive layer, and a moisture adsorption layer provided on one surface of the adhesive layer to adsorb moisture.

In an exemplary embodiment of the present invention, one surface of the adhesive layer located in a direction in which the moisture adsorption layer is provided may include a first concave-convex surface for increasing adhesion.

Specifically, when the tape for an electrode includes a moisture adsorption layer, delamination from the adhesive layer easily occurs. Therefore, in order to increase the adhesion to the adhesive layer, one surface of the adhesive layer located in the direction in which the moisture adsorption layer is provided may include a concave-convex surface. Therefore, even when the moisture adsorption layer adsorbs moisture, the adhesion is maintained due to the concave-convex surface of the adhesive layer and the moisture adsorption layer does not delaminate, so the effects of continuous moisture adsorption and end portion protection by the tape for an electrode can be expected.

In an exemplary embodiment of the present invention, a surface of the moisture adsorption layer may include a second concave-convex surface for increasing a surface area. Since the moisture adsorption layer includes the second concave-convex surface, a surface area capable of adsorbing moisture can be increased to more effectively remove moisture in the battery.

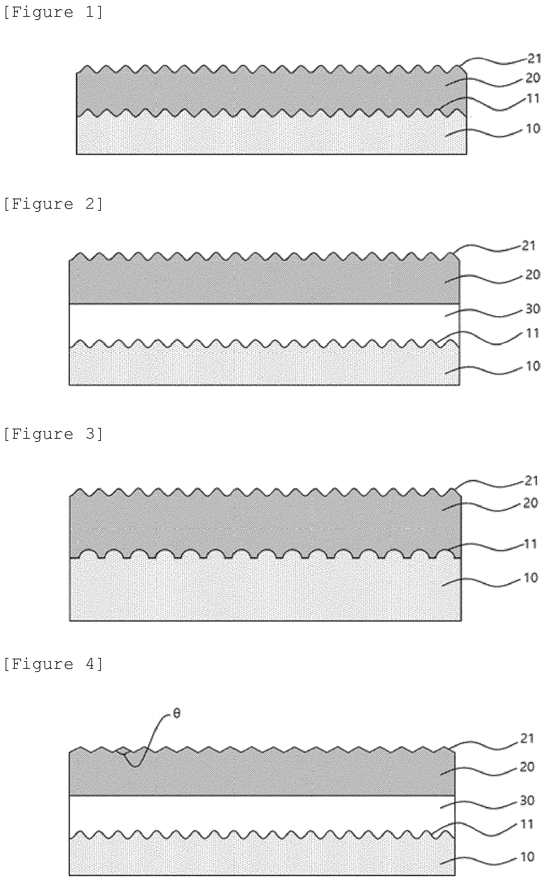

FIG. 1 is a cross-sectional view of a tape for an electrode including an adhesive layer and a moisture adsorption layer according to an exemplary embodiment of the present invention. Specifically, the tape for an electrode may include a moisture adsorption layer 20 provided on one surface of an adhesive layer 10 to adsorb moisture, and one surface of the adhesive layer 10 located in a direction in which the moisture adsorption layer 20 is provided may include a first concave-convex surface 11 for increasing adhesion. In addition, a surface of the moisture adsorption layer 20 may include a second concave-convex surface 21 for increasing a surface area. In one example, the moisture adsorption layer 20 may be provided in contact with the adhesive layer 10.

In an exemplary embodiment of the present invention, an additional layer may be provided between the adhesive layer and the moisture adsorption layer for increasing physical strength. For example, one or more polymer resin layers may be additionally provided between the adhesive layer and the moisture adsorption layer.

Referring to FIG. 2, a structure may be provided in which moisture adsorption layer 20 for adsorbing moisture is provided on one surface of the adhesive layer 10 and a polymer resin layer 30 is provided between the adhesive layer 10 and the moisture adsorption layer 20. That is, the polymer resin layer 30 may be provided in contact with one surface of the adhesive layer 10, and the moisture adsorption layer 20 may be provided in contact with the other surface of the polymer resin layer 30 opposite to one surface provided in contact with the adhesive layer 10. In this case, one surface of the adhesive layer 10 located in the direction in which the polymer resin layer 30 is provided may include a first concave-convex surface 11, and a surface of the moisture adsorption layer 20, i.e., one surface of the moisture adsorption layer 20 exposed to the air may include a second concave-convex surface 21.

In FIG. 2, only one polymer resin layer 30 is shown, but one or more polymer resin layers may be additionally provided.

The polymer resin layer may include at least one selected from the group consisting of polyimide resin, polyacrylate resin, thermoplastic polyurethane (TPU) resin, polyvinyl chloride resin, polyethylene terephthalate resin, polyethylene resin, polypropylene resin, polyamide resin, polycarbonate resin, and polystyrene resin. Specifically, the polymer resin layer may include polyimide resin. However, the present application is not limited thereto, and various polymer resin layers that are commonly used may be used without limitation.

A thickness of the polymer resin layer may be 10 um to 40 um, specifically 20 um to 30 um.

Even when the tape for an electrode has a structure having three or more layers as described above, delamination easily occurs between the polymer resin layer provided with the moisture adsorption layer and the adhesive layer. Therefore, in order to increase the adhesion between the polymer resin layer and the adhesive layer, one surface of the adhesive layer located in the direction in which the moisture adsorption layer is provided may include a concave-convex surface. Therefore, even when the moisture adsorption layer adsorbs moisture, the adhesion is maintained due to the concave-convex surface of the adhesive layer and not only the polymer resin layer but also the moisture adsorption layer does not delaminate, so the effects of continuous moisture adsorption by the tape for an electrode can be expected.

Further, in order to increase the adhesion between the polymer resin layer and the moisture adsorption layer, one surface of the polymer resin layer located in the direction in which the moisture adsorption layer is provided may include a third concave-convex surface. Therefore, the effect of continuous moisture adsorption by the tape for an electrode can be further improved by introducing the concave-convex surface to both the adhesive layer and the polymer resin layer to prevent delamination of the moisture adsorption layer.

In an exemplary embodiment of the present invention, a shape of the concave-convex surface (first concave-convex surface, second concave-convex surface, or third concave-convex surface) is not specified, and any shape to expand the surface area is possible. For example, the concave-convex surface may be formed regularly in a pattern, or may be formed irregularly with an irregular height.

The concave-convex surface may include a wave pattern, a lattice pattern, an embossed pattern in a relief shape, or an anchor pattern.

The wave pattern may refer to a pattern formed by a wavy curve. In this case, the wavy curve may form a convex portion or a concave portion, and the concave-convex surface may increase a surface area to improve adhesion or to increase the moisture adsorption effect by including the wave pattern as described above.

The lattice pattern may refer to a pattern formed by convex portions formed by intersecting linear concave portions. Alternatively, the lattice pattern may refer to a pattern formed by concave portions formed by intersecting linear convex portions. In this case, the formed convex portion or concave portion forms one lattice, and a shape of each lattice may be any one of a square, a rectangle, a parallelogram, and a rhombus. The concave-convex surface can increase the surface area to improve adhesion or to increase the moisture adsorption effect by including the lattice pattern as described above.

Referring to FIG. 3, a surface of the moisture adsorption layer 20, i.e., one surface of the moisture adsorption layer 20 exposed to the air may include a second concave-convex surface 21, and the second concave-convex surface 21 may include a lattice pattern. Although not shown in FIG. 3, other concave-convex surfaces included in the tape for an electrode may also have the lattice pattern.

In the lattice pattern, an angle θ formed by respective oblique surfaces of the convex portion may be 110° to 150°, and preferably 110° to 130° or 120°. The smaller the angle, the more advantageous it is to secure the surface area. However, since the surface of the moisture adsorption layer becomes sharp, it may damage the separator in contact with the moisture adsorption layer. Therefore, when the angle between the oblique surfaces of the lattice pattern satisfies the above range, the moisture adsorption layer can secure an appropriate surface area without damaging the separator.

For example, when the angle formed by the oblique surfaces of the convex portion of the lattice pattern is set to 120°, it is possible to secure an additional area of about 1.15 times the existing length.

An average distance between the convex portions and the concave portions may be 0.5 mm to 2.0 mm.

The embossed pattern in a relief form may be, for example, a pattern in which spherical irregularities protrude in a relief form. Referring to FIG. 4, the tape for an electrode may include a first concave-convex surface 11 on one surface of the adhesive layer 10 located in the direction in which the moisture adsorption layer 20 is provided, and the first concave-convex surface 11 may include a pattern in which spherical irregularities protrude. Since the first concave-convex surface included in the adhesive layer includes the pattern as described above, the adhesion of the adhesive layer may be improved. Although not shown in FIG. 4, other concave-convex surfaces included in the tape for an electrode may also have the embossed pattern.

The concave-convex surface can increase the surface area to improve adhesion or to increase the moisture adsorption effect by including the embossed pattern as described above.

The anchor pattern refers to a pattern formed by making grooves in an intaglio form on a surface. The groove in an intaglio form preferably has a thickness of 10% to 30% of a thickness of a layer where the pattern is present. The concave-convex surface can increase the surface area to improve adhesion or to increase the moisture adsorption effect by including the anchor pattern as described above.

The adhesive layer may include an acrylate-based resin. However, the present application is not limited thereto, and various adhesive layer materials that are commonly used in the present technical field may be appropriately employed.

A thickness of the adhesive layer may be 10 um to 40 um, or 15 um to 25 um.

The moisture adsorption layer may include an adsorptive material.

The adsorptive material is not limited as long as it can adsorb moisture and is electrochemically stable. Specifically, the adsorptive material may include one or more selected from the group consisting of silica (SiO₂) powder, metal powder such as alumina, metal oxide such as alkaline earth metal oxide and organic metal oxide, metal salt, phosphorus pentoxide (P₂O₅), BaTiO₃, PMN-PT, hafnia (HfO₂), SrTiO₃, SnO₂, CeO₂, MgO, NiO, CaO, ZnO, ZrO₂, Y₂O₃, Al₂O₃, TiO₂, soda lime, amine-grafted zeolite, NaOH, Ca(OH)₂ and KOH. The adsorptive material is not limited to those described above, and various materials that are commonly used in the present technical field may be appropriately employed.

In an exemplary embodiment of the present specification, the adsorptive material may be preferably silica powder (SiO₂). Silica powder is electrochemically very stable and has high hygroscopicity, so it has an advantage of easily adsorbing moisture while minimizing an influence on a battery reaction when placed in a battery reaction region. In addition, silica powder can be economically feasible due to the low unit price.

The adsorptive material may be mixed in a binder. For example, the adsorptive material and the binder may be mixed and then applied on the polymer resin layer to form a moisture adsorption layer. For the binder, an acrylate-based resin may be used. However, the present application is not limited thereto, and various materials that are commonly used in the present technical field may be appropriately employed.

As described above, the moisture adsorption layer includes an adsorptive material, so moisture in the battery can be effectively removed, resulting in increases in stability and performance of the battery.

The adsorptive material may be included in an amount of 5 parts by weight to 50 parts by weight or 10 parts by weight to 30 parts by weight on the basis of a total weight of the moisture adsorption layer. If the adsorptive material is included in an amount below the above range, the adsorptive material is not sufficient to remove moisture in the battery, and if the adsorptive material is included in an excessive amount, there are problems such as insufficient tape flexibility and delamination/damage of the coating layer due to lack in adhesiveness.

A thickness of the moisture adsorption layer may be 10 um to 40 um, or 15 um to 25 um.

An average thickness of the tape for an electrode may be 20 um to 100 um, specifically 30 um to 80 um, or 50 um to 70 um. However, the configuration of the tape for an electrode is not limited thereto and may vary depending on the size of the battery, and configurations known in the technical field to which the present invention pertains may be appropriately adopted.

When the tape for an electrode is composed of a double layer of an adhesive layer and a moisture adsorption layer, the thickness of the adhesive layer may be 40% to 60%, and preferably 50% of a total thickness of the tape for an electrode. In addition, the thickness of the moisture adsorption layer may be 40% to 60%, and preferably 50% of the total thickness of the tape for an electrode.

When the tape for an electrode is composed of a double layer of an adhesive layer and a moisture adsorption layer, the thicknesses of the adhesive layer and the moisture adsorption layer may be the same or may be 50%±10% of the total thickness of the tape for an electrode, respectively.

When the tape for an electrode is composed of a triple layer of an adhesive layer, a polymer resin layer, and a moisture adsorption layer, the thickness of the adhesive layer may be 20% to 40%, and preferably 30% to 35% of the total thickness of the tape for an electrode. In addition, the thickness of the polymer resin layer may be 20% to 40%, and preferably 30% to 35% of the total thickness of the tape for an electrode. Further, the thickness of the moisture adsorption layer may be 20% to 40%, and preferably 30% to 35% of the total thickness of the tape for an electrode.

When the tape for an electrode is composed of a triple layer of an adhesive layer, a polymer resin layer, and a moisture adsorption layer, the thicknesses of the adhesive layer, the polymer resin layer, and the moisture adsorption layer may be the same, or may be 1/3110% of the total thickness of the tape for an electrode, respectively.

When the tape for an electrode is composed of (n+2)-layer of an adhesive layer, an n-layer polymer resin layer (n≥1), and a moisture adsorption layer, the thicknesses of the adhesive layer, the n-layer polymer resin layer, and the moisture adsorption layer may be the same, or may be {1/(n+2)}±10% of the total thickness of the tape for an electrode, respectively.

The configuration of the tape for an electrode described above is not limited thereto and may vary depending on the size of the battery, and configurations known in the technical field to which the present invention pertains may be appropriately adopted.

In an exemplary embodiment of the present invention, the electrode assembly may include an electrode laminate including a positive electrode, a negative electrode, and a separator provided between the positive electrode and the negative electrode, and a tape for an electrode for wrapping around at least one end portion, in a long side direction, of the positive electrode.

The electrode assembly includes an electrode laminate. The electrode laminate includes a positive electrode, a negative electrode, and a separator provided between the positive electrode and the negative electrode, and the separator separates and electrically insulates the positive electrode and the negative electrode.

The electrode assembly may have a structure in which the electrode laminate is wound. Specifically, the positive electrode and the negative electrode may be wound together with the separator to form a jelly-roll type electrode assembly. Alternatively, the electrode assembly may be formed in a stack form, a stack and folding form, or the like.

The positive electrode may include a positive electrode current collector and a positive electrode active material coated on the positive electrode current collector. Here, the positive electrode current collector may be composed of, for example, a foil made of aluminum (Al). In this case, the positive electrode active material may be composed of, for example, lithium manganese oxide, lithium cobalt oxide, lithium nickel oxide, lithium iron phosphate, or a compound or mixture containing one or more thereof.

The negative electrode may include a negative electrode current collector and a negative electrode active material coated on the negative electrode current collector. Here, the negative electrode current collector may be composed of, for example, a foil made of copper (Cu) or nickel (Ni). In this case, the negative electrode active material may be made of a material including, for example, artificial graphite. In addition, the negative electrode active material may be composed of, for example, lithium metal, lithium alloy, carbon, petroleum coke, activated carbon, graphite, a silicon compound, a tin compound, a titanium compound, or an alloy thereof.

The separator is made of an insulating material and may be alternately laminated with a positive electrode and a negative electrode. Here, the separator may be positioned between the positive electrode and the negative electrode and on outer surfaces of the positive electrode and the negative electrode.

In addition, the separator may be made of a flexible material. In this case, the separator may be formed of, for example, a polyolefin-based resin film such as polyethylene and polypropylene having microporosity.

The positive electrode includes a positive electrode coated portion provided with a positive electrode active material layer and a positive electrode uncoated portion not provided with the positive electrode active material layer.

The negative electrode includes a negative electrode coated portion provided with a negative electrode active material layer and a negative electrode uncoated portion not provided with the negative electrode active material layer.

An electrode tab is attached to the positive electrode and/or the negative electrode and is electrically connected to the positive electrode and/or the negative electrode.

The electrode tab may be a positive electrode tab attached to the positive electrode or a negative electrode tab attached to the negative electrode.

The positive electrode tab may be provided on the positive electrode uncoated portion, and the negative electrode tab may be provided on the negative electrode uncoated portion.

In an exemplary embodiment of the present invention, the tape for an electrode may be provided while wrapping around at least one end portion, in a long side direction, of the positive electrode. Since the tape for an electrode is provided while wrapping around at least one end portion, in the long side direction, of the positive electrode, it can protect the end portion and effectively remove moisture, thereby effectively preventing damage to the separator due to burrs occurring when a core of the electrode assembly is deformed.

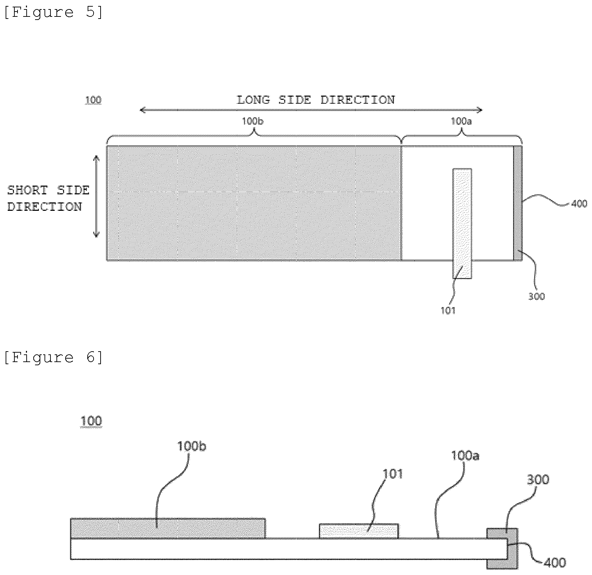

FIGS. 5 and 6 show an exemplary embodiment of a positive electrode provided with the tape for an electrode described above. Specifically, a positive electrode 100 may include a positive electrode coated portion 100b provided with a positive electrode active material layer, a positive electrode uncoated portion 100a not provided with the positive electrode active material layer, and a positive electrode tab 101 provided on the positive electrode uncoated portion 100a. In this case, a tape for an electrode 300 may be provided while wrapping around an end portion 400, in a long side direction, of the positive electrode. In one example, the tape for an electrode 300 may be attached while wrapping around the end portion 400 of the positive electrode from one surface to the other surface of the positive electrode.

In an exemplary embodiment of the present invention, the tape for an electrode may also be extended and attached so as to be provided on a positive electrode tab located on the positive electrode uncoated portion.

The tape for an electrode may be attached to cover 10% or more of an area of the positive electrode uncoated portion, in which the electrode tab is located, of one surface of the positive electrode. Specifically, the tape may cover 20% or less of the area, may cover 50% or less of the area, or may cover 90% or less of the area.

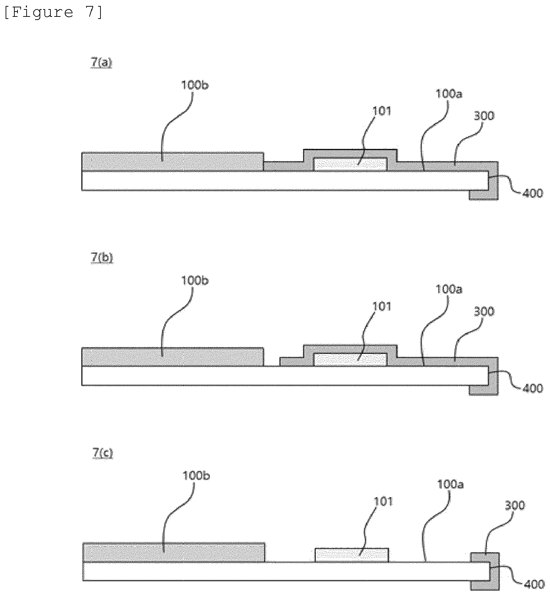

Specifically, as shown in FIG. 7(a), the tape for an electrode 300 may be attached from the end portion 400 of the positive electrode to the entire positive electrode uncoated portion 100a on one surface of the positive electrode. Alternatively, as shown in FIG. 7(b), the tape for an electrode 300 may be attached up to the positive electrode uncoated portion 100a 1 mm to 2 mm spaced apart from the positive electrode coated portion 100b in a direction of the end portion of the positive electrode. Alternatively, as shown in FIG. 7(c), the tape may be attached up to the positive electrode uncoated portion 100a 1 mm to 2 mm spaced apart from the end portion 400 of the positive electrode.

The tape for an electrode may be attached, while wrapping around the end portion of the positive electrode up to the other surface of the positive electrode where the electrode tab is not located. Although not specifically shown in FIG. 7, a length of the tape for an electrode attached to the other surface of the positive electrode may be the same as or different from a length of the tape for an electrode attached to one surface of the positive electrode. When the length of the tape for an electrode attached to the other surface of the positive electrode is different from the length of the tape for an electrode attached to one surface of the positive electrode, the length of the tape for an electrode attached to the other surface of the positive electrode may be longer or shorter than the length of the tape that is to be attached to one surface of the positive electrode where the electrode tab is located.

In an exemplary embodiment of the present invention, at least one end portion, in the long side direction, of the positive electrode where the tape for an electrode is provided may be located at the positive electrode uncoated portion. That is, at least one end portion, in the long side direction, of the positive electrode may refer to an end portion of the positive electrode uncoated portion.

The tape for an electrode may be additionally attached on the positive electrode tab or the negative electrode tab. In addition, the tape for an electrode may be additionally attached to a portion of the positive electrode uncoated portion where the positive electrode tab is not provided or to a portion of the negative electrode uncoated portion where the negative electrode tab is not provided. Further, the present invention is not limited thereto. For example, the tape may be additionally attached to a location vulnerable to moisture, such as a coating start end or terminal end of the electrode. In the case of a jelly-roll type electrode assembly, the tape may be additionally attached to an uncoated portion that is acceptable within an outer diameter range, thereby easily removing moisture in the battery.

The tape for an electrode may be additionally attached locally to a portion vulnerable to moisture within the battery to increase the moisture adsorption effect, even if the portion is not the electrode uncoated portion described above. However, when the tape is additionally attached to a portion other than the electrode uncoated portion as described above, it should be attached locally to a portion that does not affect battery performance.

Another exemplary embodiment of the present invention provides a secondary battery including the electrode assembly. The secondary battery may be a cylinder type, a pouch type, or a prism type.
An exemplary embodiment of the present invention can provide a cylindrical secondary battery including the electrode assembly.

The cylindrical secondary battery may have a structure in which the electrode assembly in which the above-described electrode laminate is wound is inserted into a cylindrical case together with an electrolyte solution.

An exemplary embodiment of the present invention can provide a pouch-type secondary battery including the electrode assembly.

The pouch-type secondary battery may have a structure in which the above-described electrode assembly is inserted into a pouch-type case together with an electrolyte solution and a sealing portion sealed at an edge of the pouch-type case is included.

Although the present invention has been described with reference to preferred embodiments, it will be understood by one skilled in the art that various modifications and variations can be made in the present invention without departing from the technical spirit and scope of the present invention.

## Claims

1. An electrode assembly comprising an electrode laminate comprising a positive electrode, a negative electrode, and a separator provided between the positive electrode and the negative electrode,
wherein the positive electrode comprises a positive electrode coated portion provided with a positive electrode active material layer and a positive electrode uncoated portion not coated with positive electrode active material,
wherein the negative electrode comprises a negative electrode coated portion provided with a negative electrode active material layer and a negative electrode uncoated portion not coated with negative electrode active material,
wherein the electrode assembly comprises a tape for an electrode for wrapping around at least one end portion, in a long side direction, of the positive electrode,
wherein the tape for an electrode comprises an adhesive layer, and a moisture adsorption layer provided on one surface of the adhesive layer to adsorb moisture,
wherein one surface of the adhesive layer located in a direction in which the moisture adsorption layer is provided comprises a first concave-convex surface for increasing adhesion, and
wherein a surface of the moisture adsorption layer comprises a second concave-convex surface for increasing a surface area.

2. The electrode assembly of claim 1, wherein at least one end portion, in the long side direction, of the positive electrode provided with the tape for an electrode is located on the positive electrode uncoated portion.

3. The electrode assembly of claim 1, wherein the tape for an electrode is attached while wrapping around the at least one end portion of the positive electrode from one surface to the other surface of the positive electrode.

4. The electrode assembly of claim 1, wherein the moisture adsorption layer comprises silica (SiO₂) powder.

5. The electrode assembly of claim 1, wherein the first concave-convex surface or the second concave-convex surface comprises a wave pattern, a lattice pattern, or an embossed pattern in a relief form.

6. The electrode assembly of claim 1, wherein the first concave-convex surface or the second concave-convex surface comprises a lattice pattern,
wherein the lattice pattern comprises convex portions, and concave portions, and
wherein an average distance between the convex portions and the concave portions is 0.5 mm to 2.0 mm.

7. The electrode assembly of claim 1, wherein the second concave-convex surface comprises a lattice pattern,
wherein the lattice pattern comprises convex portions, and concave portions, and
wherein an angle (θ) formed by respective oblique surfaces of the convex portions in the lattice pattern is 110° to 150°.

8. The electrode assembly of claim 1, further comprising one or more polymer resin layers between the adhesive layer and the moisture adsorption layer.

9. The electrode assembly of claim 8, wherein one surface of the polymer resin layer located in a direction in which the moisture adsorption layer is provided comprises a third concave-convex surface for increasing adhesion.

10. The electrode assembly of claim 1, wherein the electrode assembly comprises a structure in which the electrode laminate is wound.

11. A secondary battery comprising the electrode assembly of any one of claims 1 to 10.
